# EUROPEAN PATENT APPLICATION

(11) **EP 4 760 245 A1**
(43) Date of publication of application: **17.06.2026**
(21) Application number: 25857221.3
(22) Date of filing: 25.07.2025
(51) Int. Cl.: G01N 23/046, G01N 23/083, G01N 23/18

(54) **BATTERY ELECTRODE-TAB INSPECTION DEVICE AND METHOD**

(30) Priority: 20.08.2024 KR 20240111015
(71) Applicant: LG Energy Solution, Ltd., Seoul 07335 (KR)
(72) Inventor: EOM, Donghwan, Daejeon 34122 (KR); OH, Sangjin, Daejeon 34122 (KR); KANG, Myeonghoon, Daejeon 34122 (KR); LIM, Jihun, Daejeon 34122 (KR); HONG, Seung Gyun, Daejeon 34122 (KR)
(74) Representative: Goddar, Heinz J.
(86) International application number: PCT/KR2025/011068
(87) International publication number: WO 2026/043135

(57) **Abstract**

An electrode-tab inspection device according to an embodiment of the present invention may comprise: at least one processor; and a memory for storing at least one instruction that is executed through the at least one processor. Here, the at least one instruction may include: an instruction to acquire computed tomography (CT) data of a battery from a CT device; an instruction to derive, from the CT data, an electrode-tab region in which a predefined upper portion of an electrode tab is located, based on a height direction of the battery; an instruction to extract, from the CT data, a vertical cross-sectional image of the electrode tab by using a horizontal cross-sectional image within the electrode-tab region; and an instruction to determine whether the electrode tab is defective by using the vertical cross-sectional image of the electrode tab.

## Description

### [Technical Field]

This application claims priority to and the benefit of Korean Patent Application No.10-2024-0111015 filed in the Korean Intellectual Property Office on August 20, 2024 the entire contents of which are incorporated herein by reference.

The present invention relates to an apparatus and method for inspecting an electrode tab of a battery, and more particularly, to an apparatus and method for inspecting an electrode tab of a battery for determining whether the electrode tab is defective using computed tomography (CT) data of battery.

### [Background Art]

Secondary batteries, capable of recharging and reuse, may be used as an energy source for small devices such as mobile phones, tablet PCs and vacuum cleaners, and also used as an energy source for medium and large devices such as automobiles and an energy storage system (ESS) for smart grids.

Secondary batteries may be categorized into can-type batteries, where the electrode assembly is housed in a cylindrical metal can, and pouch-type batteries, where the electrode assembly is housed in a pouch-shaped case. Cylindrical can-type batteries are generally known for their relatively high capacity and structural stability.

Cylindrical batteries are manufactured through a series of processes, including electrode manufacturing, electrode assembly manufacturing, electrode assembly insertion, and can assembly bonding. Meanwhile, quality inspection may be performed during and after the manufacturing process for cylindrical batteries.

The electrode assembly of a cylindrical battery is formed by stacking and winding a positive and negative electrode plate with a separator interposed between them in a jelly roll shape. The positive and negative electrode tabs protrude from the positive and negative plates, respectively, and are bonded to positive and negative electrodes.

Typically, defect inspection of electrode tabs is performed by visually inspecting vertical cross-sectional images obtained from computed tomography (CT) data of the battery, and then screening out batteries with defective electrode tabs. The accuracy of this electrode tab inspection method depends on the operator's inspection skills, which can lead to low inspection reliability and delayed inspection times. Furthermore, this method makes it impossible to inspect all batteries produced, and thus, only a few selected ones can be inspected.

To address these issues, a suitable inspection technology is needed that can more accurately and quickly determine whether a battery has a defective electrode tab.

Among the prior art documents relevant to the present invention, KR 10-2024-0100647 A is of some relevance.

### [Detailed Description of the Invention]

### [Technical Problem]

To obviate one or more problems of the related art, embodiments of the present disclosure provide an electrode tab inspection apparatus for determining whether the electrode tab of a battery is defective using computed tomography (CT) data.

To obviate one or more problems of the related art, embodiments of the present disclosure also provide an electrode tab inspection method performed by the electrode tab inspection apparatus.

To obviate one or more problems of the related art, embodiments of the present disclosure also provide an electrode tab inspection system including the electrode tab inspection apparatus.

### [Technical Solution]

In order to achieve the objective of the present disclosure, an electrode tab inspection apparatus may include at least one processor; and a memory configured to store at least one instruction executed by the at least one processor.

Here, the at least one instruction may include an instruction to obtain computed tomography (CT) data of a battery from a CT device; an instruction to derive, from the CT data, an electrode tab region where a predetermined upper portion of the electrode tab is located based on the height direction of the battery; an instruction to extract a vertical cross-sectional image of the electrode tab from the CT data using a horizontal cross-sectional image within the electrode tab region; and an instruction to determine whether the electrode tab is defective using the vertical cross-sectional image of the electrode tab.

The instruction to derive the electrode tab region may include an instruction to determine a start height and an end height of the upper portion of the electrode tab based on a gray level for each of a plurality of horizontal cross-sectional images.

The instruction to derive the electrode tab region may include an instruction to determine a first height corresponding to a bend portion of the electrode tab and a second height corresponding to an end portion of the electrode tab; and an instruction to determine a region from the first height to the second height as the electrode tab region.

The instruction to extract the vertical cross-sectional image of the electrode tab may include an instruction to extract a vertical cross-sectional image passing through a vertical center plane of the electrode tab using a first horizontal cross-sectional image at the first height and a second horizontal cross-sectional image at the second height.

The instruction to extract the vertical cross-sectional image may include an instruction to define a bend line of the electrode tab in the first horizontal cross-sectional image and to define an end line of the electrode tab in the second horizontal cross-sectional image; an instruction to define a center line of the electrode tab passing through the midpoint of the bend line and the midpoint of the end line; and an instruction to extract a vertical cross-sectional image corresponding to the electrode tab center line from the CT data.

The instruction to determine whether the electrode tab is defective may include an instruction to determine, using the vertical cross-sectional image, one or more of: whether there is contact between the electrode tab and an electrode assembly; whether there is contact between the electrode tab and an inner wall of the battery; and whether there is a shape defect of the electrode tab.

The instruction to determine whether the electrode tab is defective may include an instruction to input the vertical cross-sectional image into a diagnostic model which is pre-trained using vertical cross-sectional images as learning data and to obtain diagnostic result data from the diagnostic model.

According to another embodiment of the present disclosure, an electrode tab inspection method, using an electrode tab inspection apparatus which is connected to and interoperates with a computed tomography (CT) device, may include: a step of acquiring CT data of a battery from the CT device; a step of deriving an electrode tab region where a predetermined upper portion of the electrode tab is located based on the height direction of the battery, from the CT data; a step of extracting a vertical cross-sectional image of the electrode tab from the CT data using a horizontal cross-sectional image within the electrode tab region; and a step of determining whether the electrode tab is defective using the vertical cross-sectional image of the electrode tab.

The step of deriving the electrode tab region may include a step of determining a start height and an end height of the upper portion of the electrode tab based on a gray level for each of a plurality of horizontal cross-sectional images.

The step of deriving the electrode tab region may include: a step of determining a first height corresponding to a bend portion of the electrode tab and a second height corresponding to an end portion of the electrode tab; and a step of determining a region from the first height to the second height as the electrode tab region.

The step of extracting the vertical cross-sectional image of the electrode tab may include a step of extracting a vertical cross-sectional image passing through a vertical center plane of the electrode tab using a first horizontal cross-sectional image at the first height and a second horizontal cross-sectional image at the second height.

The step of extracting the vertical cross-sectional image may include: a step of defining a bend line of the electrode tab in the first horizontal cross-sectional image and defining an end line of the electrode tab in the second horizontal cross-sectional image; a step of defining a center line of the electrode tab passing through the midpoint of the bend line and the midpoint of the end line; and a step of extracting a vertical cross-sectional image corresponding to the electrode tab center line from the CT data.

The step of determining whether the electrode tab is defective may include a step of determining, using the vertical cross-sectional image, one or more of: whether there is contact between the electrode tab and an electrode assembly; whether there is contact between the electrode tab and an inner wall of the battery; and whether there is a shape defect of the electrode tab.

The step of determining whether the electrode tab is defective may include a step of inputting the vertical cross-sectional image into a diagnostic model which is pre-trained using vertical cross-sectional images as learning data and obtaining diagnostic result data from the diagnostic model.

According to another embodiment of the present disclosure, an electrode tab inspection system may include a computed tomography (CT) device configured to generate CT data of a battery; and an electrode tab inspection apparatus configured to obtain CT data from the CT device and determine whether an electrode tab located inside the battery is defective using the CT data.

Here, the electrode tab inspection apparatus extracts a vertical cross-sectional image of the electrode tab from the CT data and determines whether the electrode tab is defective using the extracted vertical cross-sectional image.

### [Advantageous Effects]

According to embodiments of the present disclosure, it is possible to perform a defect inspection of an electrode tab using a vertical cross-sectional image passing through the vertical center plane of the electrode tab, thereby further improving the accuracy and time efficiency of the electrode tab inspection.

### [Brief Description of the Drawings]

FIG. 1 illustrates a normal electrode tab and a defective electrode tab.
FIG. 2 is a block diagram of an electrode tab inspection system according to an embodiment of the present invention.
FIG. 3 is a side view of a CT device according to embodiments of the present invention.
FIG. 4 is an operational flowchart illustrating an electrode tab inspection method according to embodiments of the present invention.
FIG. 5 is a flowchart illustrating a method for deriving an electrode tab region according to embodiments of the present invention.
FIGS. 6 and 7 are reference diagrams for illustrating the method for deriving an electrode tab region according to embodiments of the present invention.
FIG. 8 is an operational flowchart of a method for deriving a vertical cross-sectional image of an electrode tab according to embodiments of the present invention.
FIG. 9 is a reference diagram for illustrating the method for deriving a vertical cross-sectional image of an electrode tab according to embodiments of the present invention.
FIG. 10 is a reference diagram illustrating a method for determining whether the electrode tab is defective according to embodiments of the present invention.
FIG. 11 is a block diagram of an electrode tab inspection system according to another embodiment of the present invention.
FIG. 12 is a block diagram of an electrode tab inspection apparatus according to embodiments of the present invention.

- 100:: battery
- 200:: CT Device
- 300:: electrode tab inspection apparatus
- 400:: diagnostic model generation apparatus
- 1200:: electrode Tab inspection apparatus

### [Best Modes for Practicing the Disclosure]

The present invention may be modified in various forms and have various embodiments, and specific embodiments thereof are shown by way of example in the drawings and will be described in detail below. It should be understood, however, that there is no intent to limit the present invention to the specific embodiments, but on the contrary, the present invention is to cover all modifications, equivalents, and alternatives falling within the spirit and technical scope of the present invention. Like reference numerals refer to like elements throughout the description of the figures.

It will be understood that, although the terms such as first, second, A, B, and the like may be used herein to describe various elements, these elements should not be limited by these terms. These terms are only used to distinguish one element from another. For example, a first element could be termed a second element, and, similarly, a second element could be termed a first element, without departing from the scope of the present invention. As used herein, the term "and/or" includes combinations of a plurality of associated listed items or any of the plurality of associated listed items.

It will be understood that when an element is referred to as being "coupled" or "connected" to another element, it can be directly coupled or connected to the other element or an intervening element may be present. In contrast, when an element is referred to as being "directly coupled" or "directly connected" to another element, there is no intervening element present.

The terms used herein is for the purpose of describing specific embodiments only and are not intended to limit the present invention. As used herein, the singular forms "a", "an" and "the" are intended to include the plural forms as well, unless the context clearly indicates otherwise. It will be further understood that the terms "comprises", "comprising", "includes", "including" and/or "having", when used herein, specify the presence of stated features, integers, steps, operations, constitutional elements, components and/or combinations thereof, but do not preclude the presence or addition of one or more other features, integers, steps, operations, constitutional elements, components, and/or combinations thereof.

Unless otherwise defined, all terms used herein, including technical and scientific terms, have the same meanings as commonly understood by one skilled in the art to which the present invention belongs. It will be further understood that terms, such as those defined in commonly used dictionaries, should be interpreted as having meanings that are consistent with their meanings in the context of the relevant art and will not be interpreted in an idealized or overly formal sense unless expressly so defined herein.

Hereinafter, the present invention and exemplary embodiments of the present invention will be described in detail with reference to the accompanying drawings.

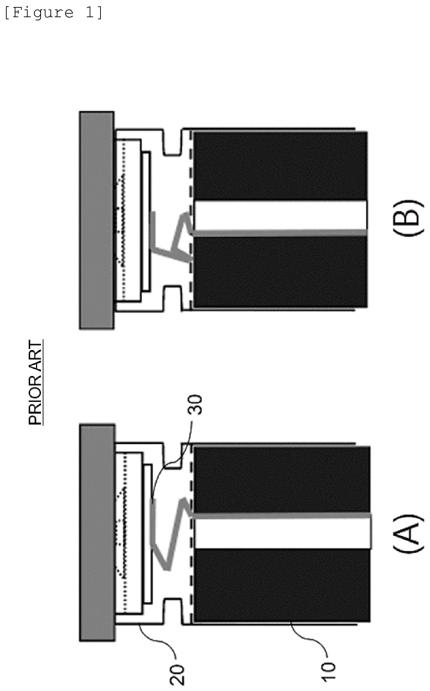

FIG. 1 illustrates a normal electrode tab and a defective electrode tab.

A cylindrical battery cell may include an electrode assembly 10 housed in a cylindrical metal can 20, a positive electrode tab 30 electrically connected to the positive electrode of the electrode assembly and protruding from the electrode assembly, and a negative electrode tab electrically connected to the negative electrode of the electrode assembly and protruding from the electrode assembly.

As illustrated in FIG. 1, a positive electrode tab 30 protrudes upward from the electrode assembly 10 and its upper end is bonded to the positive electrode terminal. As illustrated in (A) of FIG. 1, the normal positive electrode tab is bent at two locations and does not contact the electrode assembly 10 and the metal can 20.

On the other hand, if the positive electrode tab 30 is aligned (reversely aligned) opposite to an intended alignment position relative to the vertical center axis, as in the case of the positive electrode tab in (B) of FIG. 1, and thus not formed into the intended shape during the upper cap assembly process, at least a portion of the positive electrode tab 30 may contact the electrode assembly 10 and/or the metal can 20.

An general electrode tab inspection, which determines whether the electrode tab has a defective shape or poor contact, is usually performed by an operator who visually inspects a vertical cross-sectional image obtained from the battery's CT data to screen for defective batteries.

This type of electrode tab inspection method makes it difficult for the operator to identify a vertical cross-section passing through the vertical center plane of the electrode tab, thereby limiting inspection accuracy.

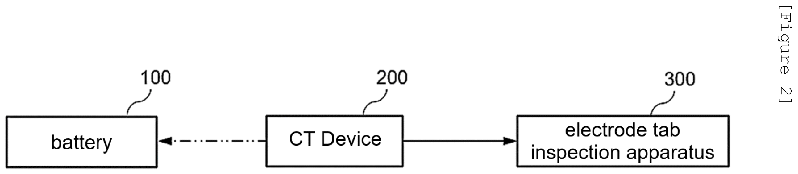

FIG. 2 is a block diagram of an electrode tab inspection system according to an embodiment of the present invention.

The battery electrode tab inspection system according to embodiments of the present invention may be utilized in a process step for inspecting the electrode tab of a battery 100 for defects.

The electrode tab inspection system may include a CT device 200 positioned at a specific location to generate CT data by taking a CT scan of the battery 100, and an electrode tab inspection apparatus 300 configured to acquire CT data from the CT device 200 and use the CT data to determine whether an electrode tab located inside the battery 100 is defective.

The battery 100 according to embodiments of the present invention may correspond to a cylindrical battery cell, but the scope of the present invention is not limited thereto.

The CT device 200 may generate CT data of the battery 100. Here, the CT data may refer to three-dimensional image data synthesized from slice images of the inside of the battery 100.

For example, the CT device 200 may acquire a cross-sectional image by irradiating the side of the battery 100 with X-rays and detecting the X-rays that have passed through the inside of the battery 100. Here, the CT device 200 may acquire multiple (e.g., 360) slice images as the battery 100 sequentially rotates by a unit angle (e.g., 1 degree) and synthesize the slice images using a predefined reconstruction algorithm to generate CT data representing the internal shape of the battery.

The CT device 200 may be positioned on a battery transport line and generate CT data for each of a plurality of batteries. Here, the CT device 200 may sequentially generate CT data for each battery by using a gripper to grasp the battery cells and reconstructing the slice images acquired during the rotation of the gripper.

The electrode tab inspection apparatus 300 may acquire CT data of the battery 100 from the CT device 200 and use the CT data to determine whether the electrode tab is defective.

The electrode tab inspection apparatus 300 may determine whether one or more of the positive and negative tabs of the battery is defective. Meanwhile, the following describes a method for inspecting for defects in a positive electrode tab, as an example. However, the scope of the present invention is not limited to the type of electrode tab.

The electrode tab inspection apparatus 300 may use CT data to determine one or more of the following: whether there is contact between the electrode tab and the electrode assembly, whether there is contact between the electrode tab and the inner wall of the battery, whether there is misalignment of the electrode tab, and whether there is a shape defect in the electrode tab. For example, the electrode tab inspection apparatus 300 may output one or more of the following: whether there is a defect in the electrode tab (OK or NG) and the type of defect (poor contact with the electrode assembly, poor contact with the can, misalignment defect, or shape defect).

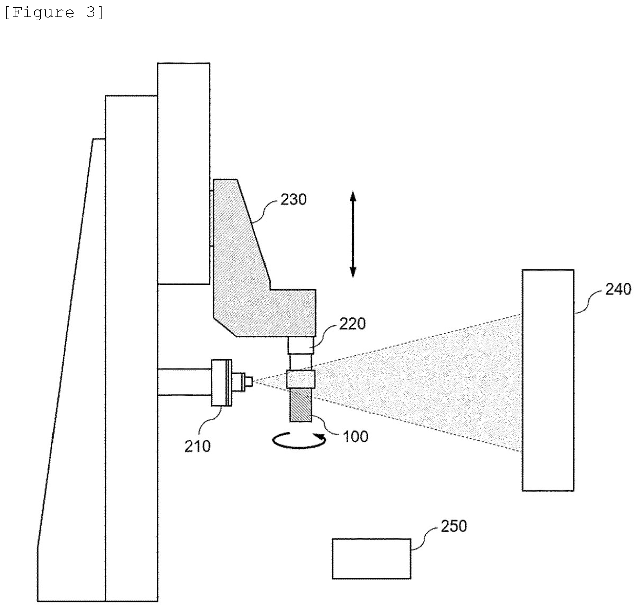

FIG. 3 is a side view of a CT device according to embodiments of the present invention.

The CT device according to embodiments of the present invention may include an X-ray irradiation unit 210, a battery gripper 220, an elevating unit 230, a detector 240, and a data processor 250.

The battery gripper 220 may grip the upper portion of the battery 100 and sequentially rotate by a predetermined unit angle. For example, the battery gripper 220 may sequentially rotate counterclockwise by 1 degree while holding the battery 100.

The X-ray irradiation unit 210 may irradiate X-rays toward a side of the battery 100. Here, the X-ray irradiation unit 210 may irradiate X-rays toward the side of the battery 100 while the battery 100 is sequentially rotated by a unit angle.

The detector 240 may detect X-rays that have passed through the interior of the battery 100 and transmit X-ray detection data corresponding to the detected X-rays to the data processor 250.

The data processor 250 may generate CT data using the X-ray detection data received from the detector 240. Specifically, the data processor 250 may generate a plurality of (e.g., 360) slice images using X-ray detection data acquired during a process in which the battery 100 is sequentially rotated by a unit angle, and synthesize the slice images using a predefined restoration algorithm to generate CT data representing the internal shape of the battery.

In an embodiment, the battery gripper 220 may be fixedly coupled to the elevating unit 230 and vertically elevated by the elevating unit 230.

As illustrated in FIG. 3, the X-ray irradiation unit 210 may irradiate X-rays toward the side of upper portion of the battery 100, so that multiple slice images (e.g., 360 images) of the upper region of the battery can be acquired. Thereafter, the elevating unit 230 may be raised to a predetermined position, and the X-ray irradiation unit 210 may irradiate X-rays toward the side of lower region of the battery 100, so that multiple slice images (e.g., 360 images) of the lower region of the battery can be acquired. Here, the data processor 250 may generate CT data using the slice images of the upper region of the battery and the slice images of the lower region of the battery.

The data processor 250 may transmit the generated CT data to the electrode tab inspection apparatus.

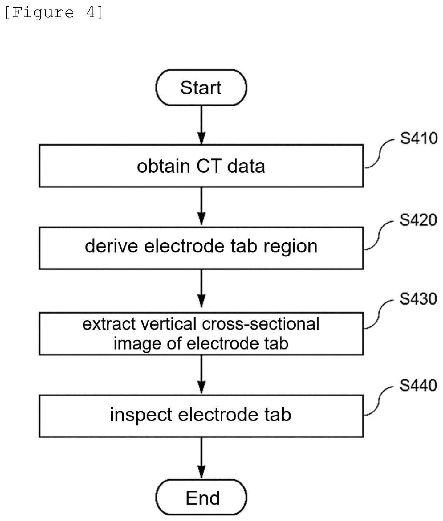

FIG. 4 is an operational flowchart illustrating an electrode tab inspection method according to embodiments of the present invention. The electrode tab inspection method according to embodiments of the present invention may be performed by an electrode tab inspection apparatus that is connected to and interoperate with a CT device.

The electrode tab inspection apparatus may obtain CT data of a battery from the CT device (step S410).

The electrode tab inspection apparatus may derive an electrode tab region, where the upper portion of a predefined electrode tab is located with respect to the height direction of the battery, from the CT data (step S420). Here, the upper portion of the electrode tab may be defined as the area from the height of the bend portion of the electrode tab to the height of the end portion of the electrode tab.

In other wrods, the electrode tab inspection apparatus may determine a first height corresponding to the bend portion of the electrode tab and a second height corresponding to the end portion of the electrode tab from the CT data and determine the region from the first height to the second height as the electrode tab region.

The electrode tab inspection apparatus may extract a vertical cross-sectional image of the electrode tab from the CT data using one or more horizontal cross-sectional images within the electrode tab region determined in the step S420 (step S430). Here, the extracted vertical cross-sectional image may be a vertical cross-sectional image passing through the vertical center plane of the electrode tab.

In embodiments, the electrode tab inspection apparatus may extract a vertical cross-sectional image passing through a vertical center plane of the electrode tab using a first horizontal cross-sectional image at a first height and a second horizontal cross-sectional image at a second height. For example, the electrode tab inspection apparatus may identify a first region corresponding to the bend portion of the electrode tab in the first horizontal cross-sectional image, identify a second region corresponding to the end portion of the electrode tab in the second horizontal cross-sectional image, and then derive the center line of the electrode tab based on the first region and second region. Thereafter, the electrode tab inspection apparatus may obtain a vertical cross-sectional image passing through a vertical center plane of the electrode tab by extracting a vertical cross-sectional image passing through the center line of the electrode tab from the CT data.

The electrode tab inspection apparatus may determine whether the electrode tab is defective (step S440) using the vertical cross-sectional image extracted in step S430. Here, the electrode tab inspection apparatus may use the vertical cross-sectional image to determine one or more of whether there is contact between the electrode tab and the electrode assembly, whether there is contact between the electrode tab and the inner wall of the battery, whether there is misalignment of the electrode tab, and whether there is a shape defect of the electrode tab.

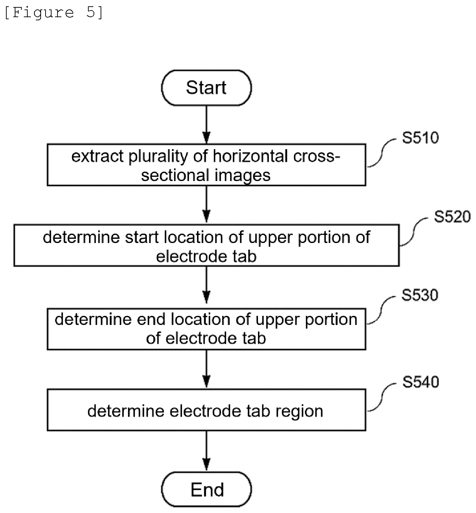

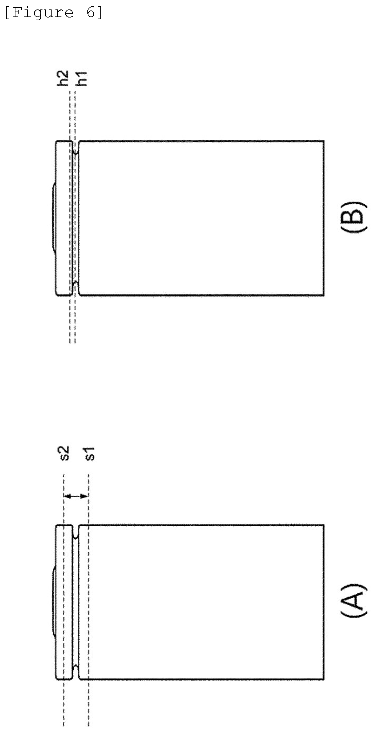

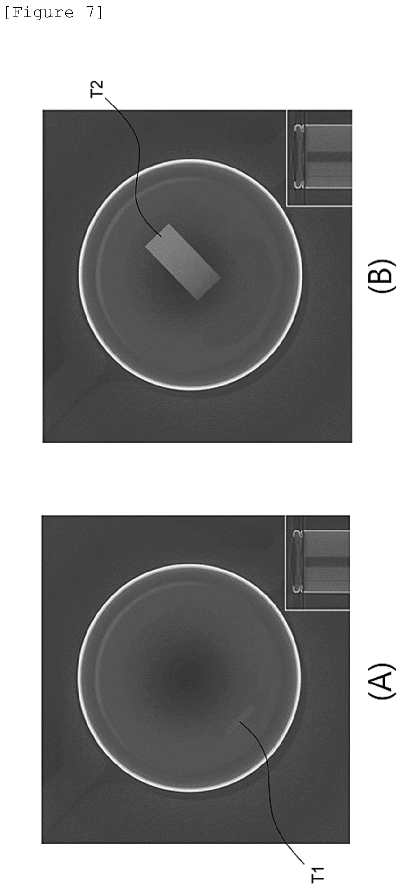

FIG. 5 is a flowchart illustrating a method for deriving an electrode tab region (an embodiment of the step S420 of FIG. 4) according to embodiments of the present invention and FIGS. 6 and 7 are reference diagrams for illustrating the method according to FIG. 5.

The electrode tab inspection apparatus may extract a plurality of horizontal cross-sectional images from CT data (the step S510). Here, the electrode tab inspection apparatus may extract horizontal cross-sectional images within a predefined search region based on the height direction of the battery.

For example, referring to (A) of FIG. 6, the search region may be predefined as the area from height s1 to height s2. Here, the search area may be an area where the upper portion (bend portion to end portion) of the electrode tab is likely to be located, and height s1 and height s2 may be predefined by an administrator.

Thereafter, the electrode tab inspection apparatus may determine the start height of the upper portion of the electrode tab (step S520) and the end height of the upper portion of the electrode tab (step S530) based on the gray levels for each of the plurality of horizontal cross-sectional images extracted in the step S510.

For example, referring to (B) of FIG. 6, the electrode tab inspection apparatus may determine the start height of the upper portion of the electrode tab, h1 (the first height corresponding to the bend portion), and the end height, h2 (the second height corresponding to the end portion).

An example of a method for determining the start height h1 and the end height h2 will be described in more detail with reference to FIG. 7.

The electrode tab inspection apparatus may calculate the gray levels for each of the plurality of horizontal cross-sectional images extracted in the step S510 and sequentially check the gray levels from the lowest image to the highest image. Here, the electrode tab inspection apparatus may determine a first horizontal cross-sectional image ((A) of Fig. 7) at an initial height where the gray level becomes equal to or greater than a predetermined value and a second horizontal cross-sectional image ((B) of Fig. 7) having the maximum gray level.

The first horizontal cross-sectional image ((A) of Fig. 7), determined based on the gray level as described above, may display a part of the bend portion T1 of the electrode tab, and the second horizontal cross-sectional image ((B) of Fig. 7) may display a part of the end portion T2 of the electrode tab.

The electrode tab inspection apparatus may determine the height coordinate of the first horizontal cross-sectional image as h1 (the first height), which is the start height of the upper portion of the electrode tab, and the height coordinate of the second horizontal cross-sectional image as h2 (the second height), which is the end height of the upper portion of the electrode tab.

Thereafter, the electrode tab inspection apparatus may determine the region from the first height (h1) to the second height (h2), determined in steps S520 and S530, as the electrode tab region (the step S540).

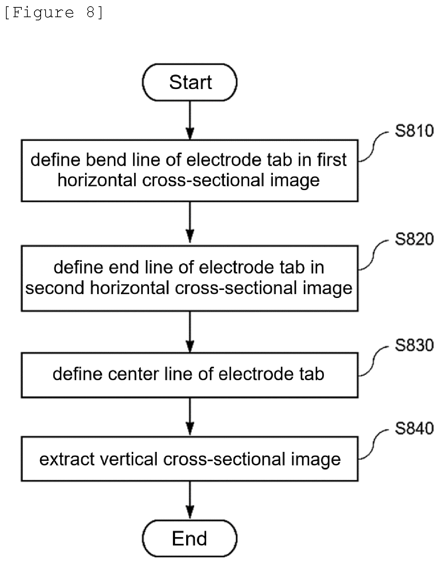

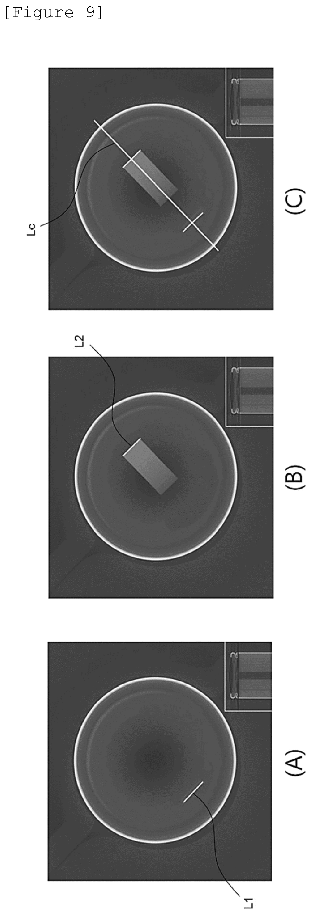

FIG. 8 is an operational flowchart of a method for deriving a vertical cross-sectional image of an electrode tab (an embodiment of the step S430 of FIG. 4) according to embodiments of the present invention and FIG. 9 is a reference diagram for illustrating the method according to FIG. 8.

The electrode tab inspection apparatus may define a bend line of the electrode tab in a first horizontal cross-sectional image of a first height (h1) (step S810).

For example, referring to (A) of FIG. 9, the electrode tab inspection apparatus may identify a first region corresponding to the bend portion of the electrode tab and, among the outlines of the first region, define the outline closest to the battery can as the bend line L1 of the electrode tab. Here, the electrode tab inspection apparatus may identify the first region and derive the outlines of the first region using a predefined edge detection algorithm.

Furthermore, the electrode tab inspection apparatus may define the end line of the electrode tab in a second horizontal cross-sectional image of a second height (h2) (step S820).

For example, referring to (B) of FIG. 9, the electrode tab inspection apparatus may identify a second region corresponding to the end portion of the electrode tab and define the outerline closest to the battery can among the outer-lines of the second region as the end line L2 of the electrode tab. Here, the electrode tab inspection apparatus may identify the second region and derive outer-lines of the second region using a predefined edge detection algorithm.

Thereafter, the electrode tab inspection apparatus may define a center line of the electrode tab (step S830) using the bend line L1 defined in the step S810 and the end line L2 defined in the step S820. Here, the center line of the electrode tab may be defined as the line passing through the midpoint of the bend line L1 and the midpoint of the end line L2.

For example, referring to (C) of FIG. 9, the electrode tab inspection apparatus may determine the midpoints of each of the bend line L1 and the end line L2, and define the line passing through these midpoints as the electrode tab center line Lc.

Thereafter, the electrode tab inspection apparatus may extract the vertical cross-sectional image corresponding to the electrode tab center line Lc from the CT data (step S840). In other wrods, the electrode tab inspection apparatus may obtain a vertical cross-sectional image passing through the vertical center plane of the electrode tab by extracting the vertical cross-sectional image passing through the center line Lc of the electrode tab from the CT data.

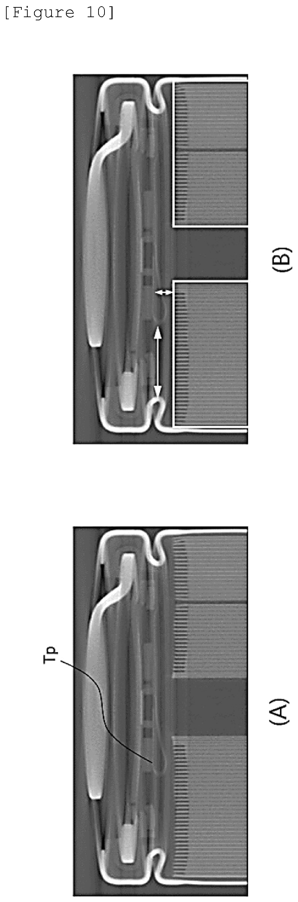

FIG. 10 is a reference diagram illustrating a method for determining whether the electrode tab is defective according to embodiments of the present invention.

The electrode tab inspection apparatus may determine whether the electrode tab is defective using the vertical cross-sectional image extracted in step S840. Here, the electrode tab inspection apparatus may use the vertical cross-sectional image to determine one or more of the following: whether there is contact between the electrode tab and the electrode assembly, whether there is contact between the electrode tab and the inner wall of the battery, whether there is misalignment of the electrode tab, and whether there are shape defects of the electrode tab.

(A) of FIG. 10 is an example of a vertical cross-sectional image. The electrode tab inspection apparatus may determine whether a positive electrode tab Tp is defective using the vertical cross-sectional image passing through the vertical center plane of the electrode tab.

The electrode tab inspection apparatus may identify the electrode tab region, the can region, and the electrode assembly region in the vertical cross-sectional image using a predefined region segmentation algorithm.

As illustrated in (B) of FIG. 10, the electrode tab inspection apparatus may calculate the shortest distance between the electrode tab region and the can region, and the shortest distance between the electrode tab region and the electrode assembly region. Using the calculated shortest distances, the electrode tab inspection apparatus may determine whether there is contact between the electrode tab and the electrode assembly, whether there is contact between the electrode tab and the inner wall of the battery, and whether there is a shape defect in the electrode tab. For example, if the shortest distance between the electrode tab and the electrode assembly is 0, the electrode tab inspection apparatus may determine that the electrode tab and the electrode assembly are in contact. For another example, if the shortest distance between the electrode tab and the can exceeds a first set range and the shortest distance between the electrode tab and the electrode assembly exceeds a second set range, the electrode tab inspection apparatus may determine that the electrode tab is shape defective.

Furthermore, if the electrode tab region is separated by a threshold distance from a predefined alignment position, the electrode tab inspection apparatus may determine that the electrode tab is reverse-aligned.

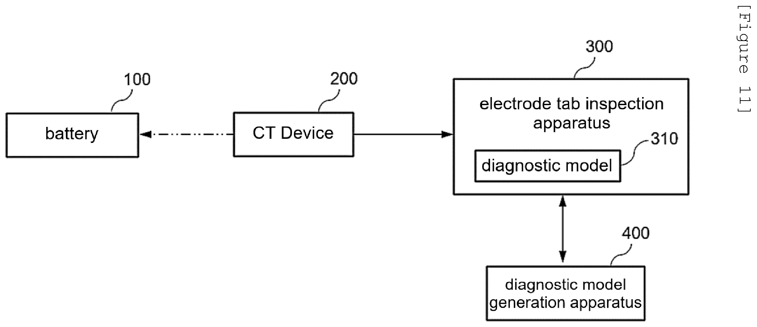

FIG. 11 is a block diagram of an electrode tab inspection system according to another embodiment of the present invention.

A battery electrode tab inspection system according to another embodiment of the present invention may include a CT device 200, an electrode tab inspection apparatus 300, and a diagnostic model generation apparatus 400.

The electrode tab inspection apparatus 300 may include a diagnostic model 310 which has been pre-trained and may use CT data and the diagnostic model 310 to determine whether an electrode tab is defective.

The diagnostic model generation apparatus 400 may generate a machine learning-based diagnostic model 310 for electrode tab inspection.

The diagnostic model generation apparatus 400 may train the diagnostic model 310, and upon completion of training, provide the diagnostic model 310 to the electrode tab inspection apparatus 300.

The diagnostic model 310 may be a machine learning-based model pre-trained using vertical cross-sectional images labeled with defect types as training data. Here, the diagnostic model 310 may be defined to output, when a vertical cross-sectional image is input, whether the electrode tab is defective and one or more of the following types of defects. For example, when a vertical cross-sectional image is input as input data, the diagnostic model 310 may output, as output data, whether the electrode tab is defective (OK or NG) and one or more of the following types of defects (electrode assembly contact failure, can contact failure, misalignment failure, shape failure).

The electrode tab inspection apparatus 300 may input the vertical cross-sectional image extracted in step S430 or S840 into the diagnostic model 310 received from the diagnostic model generation apparatus 400, and output the output data of the diagnostic model 310 as the diagnostic result.

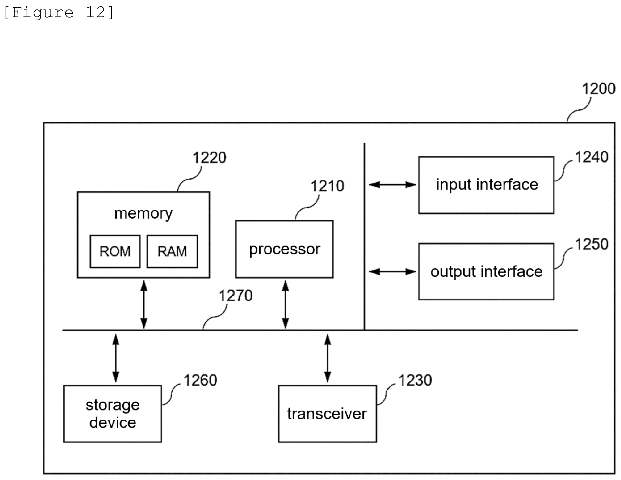

FIG. 12 is a block diagram of an electrode tab inspection apparatus according to embodiments of the present invention.

The electrode tab inspection apparatus 1200 according to embodiments of the present invention may be linked to a CT device.

The electrode tab inspection apparatus 1200 may include at least one processor 1210, a memory 1220 that stores at least one instruction executed by the processor, and a transceiver 1230 connected to a network to perform communication.

The at least one instruction may include an instruction to obtain computed tomography (CT) data of a battery from a CT device; an instruction to derive, from the CT data, an electrode tab region where a predetermined upper portion of the electrode tab is located based on the height direction of the battery; an instruction to extract a vertical cross-sectional image of the electrode tab from the CT data using a horizontal cross-sectional image within the electrode tab region; and an instruction to determine whether the electrode tab is defective using the vertical cross-sectional image of the electrode tab.

The instruction to derive the electrode tab region may include an instruction to determine a start height and an end height of the upper portion of the electrode tab based on a gray level for each of a plurality of horizontal cross-sectional images.

The instruction to derive the electrode tab region may include an instruction to determine a first height corresponding to a bend portion of the electrode tab and a second height corresponding to an end portion of the electrode tab; and an instruction to determine a region from the first height to the second height as the electrode tab region.

The instruction to extract the vertical cross-sectional image of the electrode tab may include an instruction to extract a vertical cross-sectional image passing through a vertical center plane of the electrode tab using a first horizontal cross-sectional image at the first height and a second horizontal cross-sectional image at the second height.

The instruction to extract the vertical cross-sectional image may include an instruction to define a bend line of the electrode tab in the first horizontal cross-sectional image and to define an end line of the electrode tab in the second horizontal cross-sectional image; an instruction to define a center line of the electrode tab passing through the midpoint of the bend line and the midpoint of the end line; and an instruction to extract a vertical cross-sectional image corresponding to the electrode tab center line from the CT data.

The instruction to determine whether the electrode tab is defective may include an instruction to determine, using the vertical cross-sectional image, one or more of: whether there is contact between the electrode tab and an electrode assembly; whether there is contact between the electrode tab and an inner wall of the battery; and whether there is a shape defect of the electrode tab.

The instruction to determine whether the electrode tab is defective may include an instruction to input the vertical cross-sectional image into a diagnostic model which is pre-trained using vertical cross-sectional images as learning data and to obtain diagnostic result data from the diagnostic model.

Meanwhile, the electrode tab inspection apparatus 1200 according to embodiments of the present invention may further include an input interface device 1240, an output interface device 1250, a storage device 1260, etc. Respective components included in the electrode tab inspection apparatus 1200 may be connected by a bus 1270 and can communicate with each other.

Here, the processor 1210 may mean a central processing unit (CPU), a graphics processing unit (GPU), or a dedicated processor on which methods according to embodiments of the present invention are performed. Furthermore, the memory may include at least one of a volatile/transitory storage medium and a non-volatile/non-transitory storage medium. For example, the memory may include at least one of a read-only memory (ROM) and random access memory (RAM), and may include an Electrically Erasable Programmable Read-only Memory (EEPROM).

The operations of the method according to the embodiments of the present invention may be implemented as a computer-readable program or code on a computer-readable recording medium. The computer-readable recording medium includes all types of recording devices in which data readable by a computer system is stored. In addition, the computer-readable recording medium may be distributed in a network-connected computer system to store and execute computer-readable programs or codes in a distributed manner.

The operations of the method according to embodiments of the present invention may be implemented in various forms related to programs, such as a computer program or code itself, or a computer program product.

Furthermore, the computer-readable recording medium may include one or more of a volatile/transitory recording medium and a non-volatile/non-transitory recording medium.

In addition, the computer-readable recording medium may include hardware devices specially configured to store and execute program instructions, such as ROM, RAM, flash memory, and may include, for example, various types of servers located on a network. The program instructions may include not only machine language codes, such as those created by a compiler, but also high-level language codes that can be executed by a computer using an interpreter.

Although some aspects of the invention have been described in the context of the apparatus, it may also represent a description according to a corresponding method, wherein a block or apparatus corresponds to a method step or feature of a method step. Similarly, aspects described in the context of a method may also represent a feature of a corresponding block or item or a corresponding apparatus. Some or all of the method steps may be performed by (or using) a hardware device, such as, for example, a microprocessor, a programmable computer, or an electronic circuit. In some embodiments, one or more of the most important method steps may be performed by such an apparatus.

In the forgoing, the present invention has been described with reference to the exemplary embodiment of the present invention, but those skilled in the art may appreciate that the present invention may be variously corrected and changed within the range without departing from the spirit and the area of the present invention described in the appending claims.

## Claims

1. An electrode tab inspection apparatus comprising:
at least one processor; and
a memory configured to store at least one instruction executed by the at least one processor,
wherein the at least one instruction includes:
an instruction to obtain computed tomography data of a battery from a computed tomography device;
an instruction to derive, from the computed tomography data, an electrode tab region where a predetermined upper portion of the electrode tab is located based on the height direction of the battery;
an instruction to extract a vertical cross-sectional image of the electrode tab from the computed tomography data using a horizontal cross-sectional image within the electrode tab region; and
an instruction to determine whether the electrode tab is defective using the vertical cross-sectional image of the electrode tab.

2. The electrode tab inspection apparatus of claim 1,
wherein the instruction to derive the electrode tab region includes:
an instruction to determine a start height and an end height of the upper portion of the electrode tab based on a gray level for each of a plurality of horizontal cross-sectional images.

3. The electrode tab inspection apparatus of claim 1, wherein the instruction to derive the electrode tab region includes:
an instruction to determine a first height corresponding to a bend portion of the electrode tab and a second height corresponding to an end portion of the electrode tab; and
an instruction to determine a region from the first height to the second height as the electrode tab region.

4. The electrode tab inspection apparatus of claim 3, wherein the instruction to extract the vertical cross-sectional image of the electrode tab includes:
an instruction to extract a vertical cross-sectional image passing through a vertical center plane of the electrode tab using a first horizontal cross-sectional image at the first height and a second horizontal cross-sectional image at the second height.

5. The electrode tab inspection apparatus of claim 4, wherein the instruction to extract the vertical cross-sectional image includes:
an instruction to define a bend line of the electrode tab in the first horizontal cross-sectional image and to define an end line of the electrode tab in the second horizontal cross-sectional image;
an instruction to define an electrode tab center line passing through the midpoint of the bend line and the midpoint of the end line; and
an instruction to extract a vertical cross-sectional image corresponding to the electrode tab center line from the computed tomography data.

6. The electrode tab inspection apparatus of claim 1, wherein the instruction to determine whether the electrode tab is defective includes:
an instruction to determine, using the vertical cross-sectional image, one or more of: whether there is contact between the electrode tab and an electrode assembly; whether there is contact between the electrode tab and an inner wall of the battery; and whether there is a shape defect of the electrode tab.

7. The electrode tab inspection apparatus of claim 1, wherein the instruction to determine whether the electrode tab is defective includes:
an instruction to input the vertical cross-sectional image into a diagnostic model which is pre-trained using vertical cross-sectional images as learning data and to obtain diagnostic result data from the diagnostic model.

8. An electrode tab inspection method using an electrode tab inspection apparatus which is connected to and interoperates with a computed tomography device, comprising:
a step of acquiring computed tomography data of a battery from the computed tomography device;
a step of deriving an electrode tab region where a predetermined upper portion of the electrode tab is located based on the height direction of the battery, from the computed tomography data;
a step of extracting a vertical cross-sectional image of the electrode tab from the computed tomography data using a horizontal cross-sectional image within the electrode tab region; and
a step of determining whether the electrode tab is defective using the vertical cross-sectional image of the electrode tab.

9. The electrode tab inspection method of claim 8,
wherein the step of deriving the electrode tab region includes:
a step of determining a start height and an end height of the upper portion of the electrode tab based on a gray level for each of a plurality of horizontal cross-sectional images.

10. The electrode tab inspection method of claim 8,
wherein the step of deriving the electrode tab region includes:
a step of determining a first height corresponding to a bend portion of the electrode tab and a second height corresponding to an end portion of the electrode tab; and
a step of determining a region from the first height to the second height as the electrode tab region.

11. The electrode tab inspection method of claim 10,
wherein the step of extracting the vertical cross-sectional image of the electrode tab includes:
a step of extracting a vertical cross-sectional image passing through a vertical center plane of the electrode tab using a first horizontal cross-sectional image at the first height and a second horizontal cross-sectional image at the second height.

12. The electrode tab inspection method of claim 11,
wherein the step of extracting the vertical cross-sectional image includes:
a step of defining a bend line of the electrode tab in the first horizontal cross-sectional image and defining an end line of the electrode tab in the second horizontal cross-sectional image;
a step of defining an electrode tab center line passing through the midpoint of the bend line and the midpoint of the end line; and
a step of extracting a vertical cross-sectional image corresponding to the electrode tab center line from the computed tomography data.

13. The electrode tab inspection method of claim 8,
wherein the step of determining whether the electrode tab is defective includes:
a step of determining, using the vertical cross-sectional image, one or more of: whether there is contact between the electrode tab and an electrode assembly;
whether there is contact between the electrode tab and an inner wall of the battery; and whether there is a shape defect of the electrode tab.

14. The electrode tab inspection method of claim 8,
wherein the step of determining whether the electrode tab is defective includes:
a step of inputting the vertical cross-sectional image into a diagnostic model which is pre-trained using vertical cross-sectional images as learning data and obtaining diagnostic result data from the diagnostic model.

15. An electrode tab inspection system comprising:
a computed tomography device configured to generate computed tomography data of a battery; and
an electrode tab inspection apparatus configured to obtain computed tomography data from the computed tomography device and determine whether an electrode tab located inside the battery is defective using the computed tomography data,
wherein the electrode tab inspection apparatus extracts a vertical cross-sectional image of the electrode tab from the computed tomography data and determines whether the electrode tab is defective using the extracted vertical cross-sectional image.
